# EUROPEAN PATENT APPLICATION

(11) **EP 2 472 831 A1**
(43) Date of publication of application: **04.07.2012**
(21) Application number: 10812386.0
(22) Date of filing: 26.08.2010
(51) Int. Cl.: H04M 1/02

(54) **MOBILE TELEPHONE**

(30) Priority: 26.08.2009 RU 2009132322; 26.08.2009 RU 2009132239; 02.07.2010 RU 2010127435
(71) Applicant: Agarkov, Andrey Vyacheslavovich, Sverdlovskaya obl. 620100 (RU)
(72) Inventor: Agarkov, Andrey Vyacheslavovich, Sverdlovskaya obl. 620100 (RU)
(74) Representative: Sloboshanin, Sergej
(86) International application number: PCT/RU2010/000471
(87) International publication number: WO 2011/025409

(57) **Abstract**

The invention relates to mobile communication devices, and can be used in the designs of cell telephones, smart phones, satellite telephones, communicators, mobile control heads, etc. A mobile telephone consists of a system for receiving and transmitting wireless communications (microchips, a dynamic speaker, a microphone, an antenna, etc), a main body on which a keyboard is arranged, a panel on which a screen is arranged, functional and removable elements (a button on/off, a battery, electrical connectors, SIM-card slots and memory cards, etc.), the main body and the panel are connected in such a way as to be capable of being shifted in relation to one another, moreover the main body is made U-shaped, the panel may be made U-shaped or rectangular in shape, the connection between the panel and the main body is designed in such a way that, in the "closed" mode of the telephone, the front and rear sides and the lower edge of the telephone are formed by parts of the main body, and the upper edge and at least the upper parts of the lateral edges of the telephone are formed by parts of the panel, moreover, the functional and removable elements arranged on the lower part of the main body are enclosed by the lateral edges of the panel, and the functional and removable elements arranged on the lower part of the panel are enclosed by the lateral edges of the main body, in the "open" mode of the telephone, specified shifting of the panel in relation to the main body opens an access to the functional and removable elements. In the lower part of the main body a niche on which a lower part of the panel is placed may be arranged. The technical result consists in extending the functional possibilities whilst at the same time increasing operational reliability.

## Description

### TECHNICAL FIELD

The invention relates to mobile communication devices and can be used in the designs of cell telephones, smart phones, satellite telephones, communicators, mobile control heads, etc.

### PRIOR ART

In science and technology different designs of mobile telephones are well-known.

For example, there is a known mobile telephone device comprising a body with an internal box in which a panel with an additional screen is arranged, at the same time an additional screen is larger than the main screen, placed on the outer side of the body. The panel with the additional screen is closer to the rear side of the telephone. If necessary, the panel with the additional screen is pulled out of the box. (Application JP Nº 2007189410, SPC N04M1/02, 2007).

The disadvantages of the said device should include limited functionality, complexity of operation, due to the complexity of design, as for putting forward of the panel with the additional screen a drive, internal holdback elements, external control units are required. Arrangement of the panel with the additional screen inside the body increases the thickness of the telephone.

The closest device according to the technical nature is a telephone device with a slide out screen (Patent US 7149557 SPC N04M 1/00; N02V 1/00 2006). In this device, in the body, a cavity limited with the frame is implemented, a gap connected with the cavity is made in the end surface of the telephone body, a panel with a screen is installed on the frame, the panel with the screen is adapted to move along the frame outside the dimensions of the telephone through a crack in the body, on the front side a transparent window is installed, through it one can observe a fragment of the screen. The telephone works in two modes, in the closed position the panel with the screen is inside the body, and in the open position the panel with the screen extends beyond the dimensions of the telephone. The panel with the screen is closer to the front side of the body, behind the panel there is a system for receiving and transmitting wireless communications and batteries.

The disadvantage of the described device is limited functionality, related to the fact that the design features are aimed solely at protecting the panel with the screen, and the extension of the panel will require the implementation of additional control units and keeping inside the body, the walls of the main body and clearances with the panel constraint the width of the panel and thus the width of the screen. In addition, in the said device access to functional and removable elements (control units, battery, connectors, SIM-card slots and memory cards, etc.) is inhibited and for their protection doing hatches is required, which complicates the design of the telephone. Arrangement of the system for receiving and transmitting wireless communications behind the panel and the location of the panel inside the body increases the dimensions of the telephone.

### DISCLOSURE OF INVENTION

The basis of the presented invention is improving the service reliability of the compact mobile telephone while increasing functionality and expanding the range of products.

It is proposed to solve the task by performing a sliding-type mobile telephone, and the design shall ensure in the closed position the protection of the telephone elements arranged at the main body and at the panel, and in the open position there shall be provided unobstructed access to them, the ability to pursue the panel equal to or bigger than the main body according to thickness and width, the ability to set the screen of a maximum size, ergonomic placement of control units, the ability to put forward the panel while effecting on one of its sides, reducing the number of covers blocking access to the functional and removable elements, while providing the minimum dimensions of the telephone.

A mobile telephone consists of the system for receiving and transmitting wireless communications, the main body, on which the keyboard is arranged, the panel where the screen is placed, functional and removable elements, the main body and the panel are connected with the ability to shift relative to each other, different in that the main body is made U-shaped, the connection of the panel and the main body is done in such a way that in the telephone mode "closed" front, rear sides and the lower edge of the telephone are formed by parts of the main body, and the upper edge, and at least, upper parts of the lateral edges of the telephone are formed by parts of the panel, herewith the functional and removable elements arranged on the bottom of the main body are enclosed by the lateral edges of the panel, and functional and removable elements arranged on the bottom of the panel, are enclosed by the lateral edges of the main body, in the telephone mode "open" given shift of the panel relative to the main body opens access to the functional and removable elements.

As a system for receiving and transmitting wireless communications, chips, a dynamic speaker, a microphone, an antenna, etc. are used.

The functional and removable elements in the present specification refer to: a button on/off, a battery, electrical connectors, SIM-card slots and memory cards, etc.

At the bottom of the main body a niche, wherein the lower part of the panel is placed, can be additionally pursued.

For connection of electronic components of the panel and the main body the loopback wire is installed therebetween or wireless connection is made.

For the displacement of the panel, a mechanical or electric propulsion, connected with the panel by the drive, may be additionally installed. The said displacement of the panel relative to the main body is provided by guide members and limit switches.

The lateral edges of the main body in whole or in part can be represented by faceplates, and niches can be made in the panel. In the "closed" mode faceplates are placed in the niches of the panel.

The main body or panel in whole or in part can be made of transparent material.

Implementation of U-shaped main body protects the panel with the screen from mechanical impacts. On the front side of the main body a pushbutton type keyboard or a touch-type keyboard is installed, on the rear side the mechanism of the panel extension can be fixed, the lower part of the main body is made in the form of a block or a bridge connection between the front and rear sides.. On the lateral edges of the lower part of the main body functional and removable elements can be arranged.

On the front side of the panel the screen is placed, and on the rear side, for example, a video camera is. A preferred form of panel implementation of the claimed telephone is Π-shaped or rectangular. At the lateral edges of the lower part of the panel or the main body functional and removable elements can be set.

In the claimed design of the telephone in the mode "closed" U-shaped main body and the panel with the screen interact with each other in such a way that the front, rear side and the lower edge of the telephone are represented by the parts of the main body, and the upper edge of the telephone is represented by the parts of the panel with the screen. While implementing Π-shaped panel the lateral edges of the telephone are represented by parts of the panel, and functional and removable elements are arranged on lower part of the main body and enclosed by the lateral edges of the panel. While implementing the rectangular panel, the upper part of the lateral edges of the telephone is represented by parts of the panel, and the lower part is represented by parts of the main body, thus functional and removable elements are placed on the lower part of the panel and are enclosed by the lateral edges of the main body.

Displacement of the panel relative to the main body happens during muscular impact of the user and/or by switching on of the propulsion. The implementation of additional components rigidly or kinetically connected with the panel, shifting of the panel occurs while impacting there on, is possible.

In the telephone mode "open" the panel and the main body are shifted partially relative to each other, in this case an access to the front and rear sides of the panel is opened as well as to functional and removable elements. Sliding joint of the main body with the panel is ensured by guide members.

In the telephone mode "disconnected" the panel and the main body are separated from each other. For this function, the main body and the panel have detachable connection to provide a quick access to items on the panel or replace the main body with one type of keyboard to another. As a detachable connection elements, latches, electrical connectors, and other known elements can be set.

The claimed design differs from previously known designs of telephones in the availability of U-shaped main body, connection of the panel and the main body is done in such a way that in the telephone mode "closed" the front, rear sides and the lower edge of the telephone are formed by parts of the main body, and the upper edge, and, at least, upper parts of telephone lateral edges are formed by the panel parts, and functional and removable elements placed on the lower part of the main body are enclosed by the lateral edges of the panel, and functional and removable elements placed on the lower part of the panel are enclosed by lateral edges of the main body, in telephone mode "open" specified shifting of the panel relative to the main body opens a access to functional and removable elements.

### BEST MODES

Specific alternatives of the claimed mobile telephone are described hereinafter with references to the accompanying drawings.
Fig. 1 is a mobile telephone as claimed in claim 1 in the mode "open",
Fig. 2 is a mobile telephone as claimed in claim 1 in the mode "closed",
Fig. 3 is a U-shaped main body (side view) of the telephone as claimed in claim 1,
Fig. 4 is a Π-shaped panel of the telephone as claimed in claim 1,
Fig. 5 is a mobile telephone as claimed in claim 2 with a Π-shaped panel and a screen, thus the panel is executed with the width bigger than the width of the main body, and with the thickness equal to the thickness of the main body, the screen is of a maximum size, in other respects the design is analogous to the telephone as claimed in claim 1,
Fig. 6 is a mobile telephone as claimed in claim 3 in the mode "closed", differs from claim 1 in the fact that the panel is rectangular, forming the upper part of the lateral edge of the telephone, and the lower part of the telephone is formed by the lateral edge of the main body,
Fig. 7 is a mobile telephone in the mode "open" as claimed in claim 3 with propulsion in the form of an electric motor fixed on the panel. In the main body a niche is made, the lower part of the panel goes therein in the telephone mode "closed". Quick connect/disconnect elements allow to disconnect the panel and the main panel of the mobile telephone, if necessary.
Fig. 8 is a rectangular panel of a mobile telephone as claimed in claim 3, a lower part of the panel with functional and removable elements wherein.

A mobile telephone comprising: a U-shaped main body 1, a Π-shaped panel 2 and 19, a screen 3, a keyboard 4, a front 5 and a rear side 6 of a main body 1, a lower 7, upper 8 and a lateral edge 9 of a main body 1, a lower part 11 of a main body 1, a lateral edge 10 of a panel 2, a lower part 12 of a panel 2 and 19, functional and removable elements 13, a panel 14 rectangular in shape, a propulsion 15, an element of shifting 16 of a panel, a niche 17 in a main body 1, quick connect/disconnect elements 18 of a panel 14 and a main body 1, guide members with limit switches 20, an upper part of lateral edges 21 of a telephone.

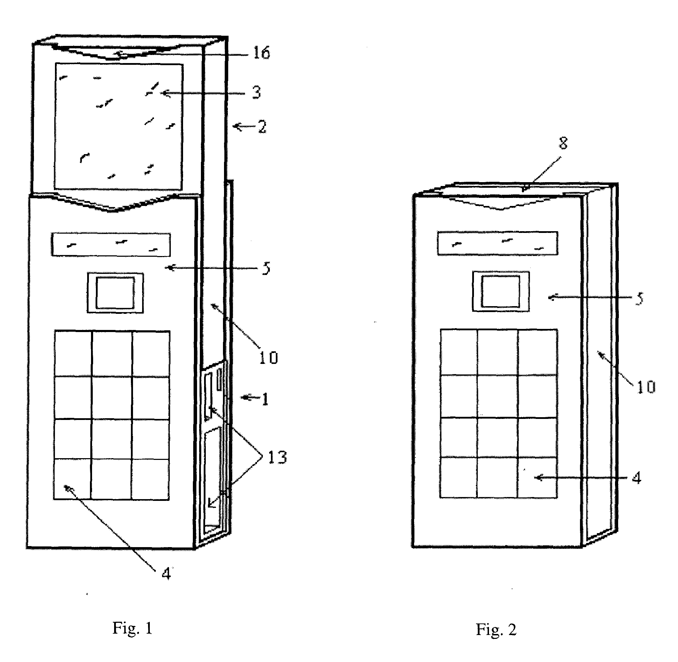

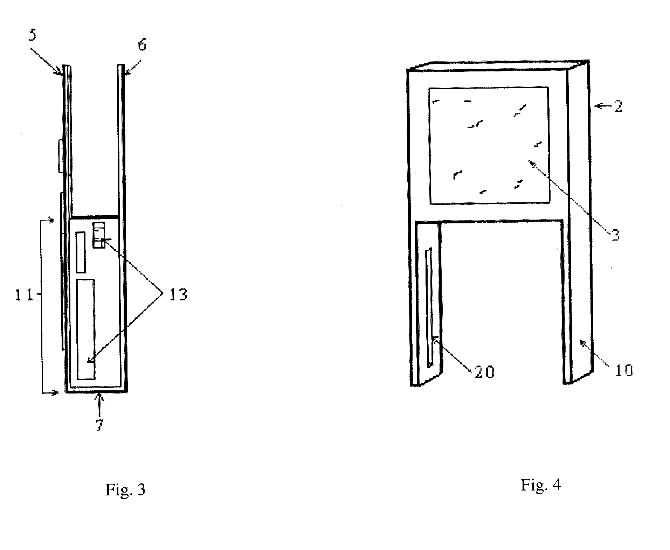

The claimed mobile telephone, shown in figs. 1 to 5, is implemented with a Π-shaped panel, and operates in the following way. In the mode "closed" a U-shaped main body 1 and the panel 2 with the screen 3 interact with each other in such a way that the front 5, rear side 6 and the lower edge 7 of the telephone are represented by the parts of the main body 1, and the upper edge 8 of the telephone is represented by the parts of the panel 2 with the screen 3. Lateral edges of the telephone are represented by lateral edges 10 of the panel 2, functional and removable elements 13 are arranged at the lower part 11 of the main body 1 and are enclosed by lateral edges 10 and 2.

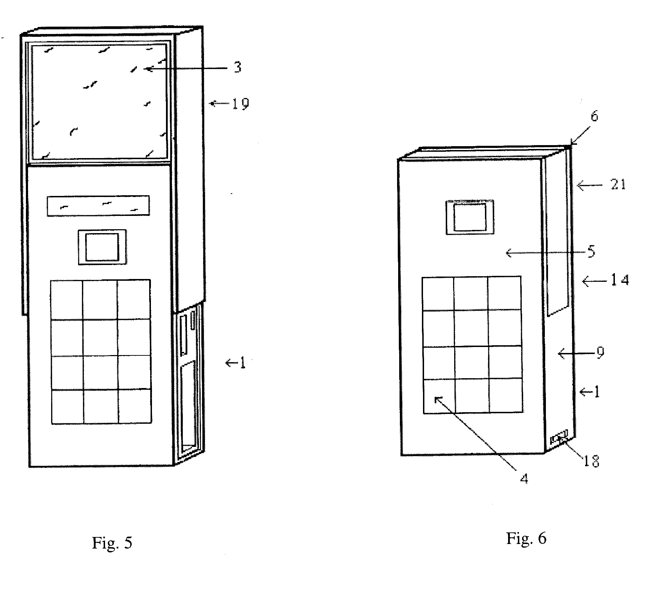

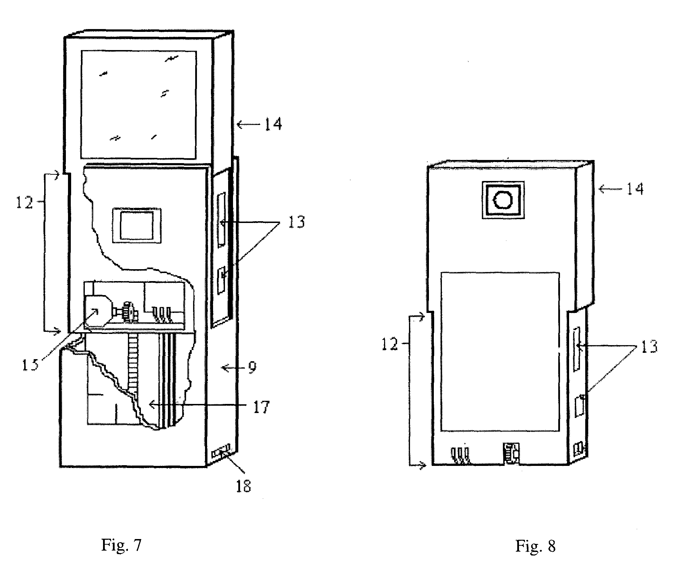

While implementing a mobile telephone as claimed in claim 3, wherein the panel 14 is rectangular (figs. 6 to 8), the upper part of lateral edges 21 of the telephone is represented by the parts of the panel 14, and the lower part is represented by the lateral edge 9 of the main body 1, thereafter functional and removable elements 13 are placed on the lower part 12 of the panel and are enclosed by the lateral edges 9 of the main body.

During muscular impact on the lateral edge 10 of the panel 2 or 14 or 19 or on the element of shifting 16, made, for example, in the form of projection or a peak, rigidly connected with the panel 2, or during switching on of the propulsion 15, the panel 2, 14, 19 is shifting in relation to the main body 1 along the guide members with limit switches 20 and rises above the front side 5 of the main body 1, making the telephone in the mode "open". In doing so an access to the screen 3 and also to the lower part of the main body 11, or to the lower part 12 of the panel 14, where functional and removable elements 13 are arranged.

The work of the mobile telephone, as claimed in Figs. 6 to 8, is similar to that claimed in figs. 1 to 5.

Other possible designs of the proposed telephone come to combinations of options of the connection of the main body and the panel.

### INDUSTRIAL APPLICABILITY

The claimed design of the telephone increases its operational reliability due to the fact that in the closed position there is no free access to the elements of the telephone arranged on the main body and on the panel with the screen, and in the open position there is a free access to said elements of the telephone. The form of the main body and the panel, and their mutual arrangement allow, if necessary, to place on the panel a screen of a maximum size, and the design of the telephone in general allows implementing the panel of the same or greater width than the main body, for setting the screen of an economic size. Moreover, the form of the main body and the panel, and their mutual arrangement allow, if necessary, to implement the panel of the same or greater thickness than the main body for putting the telephone into operation easily when effecting on the lateral edges of the panel. In addition, the proposed design of the mobile telephone provides its compact shape, ergonomic placement of control units, comfortable access to functional and removable elements, decrease in the number of separate hatches to electrical connectors, decrease in process connections on the body, rational arrangement of components in the telephone body, sliding out of the panel without additional control units due to taking effect on the lateral edges of the panel what will ensure additional functionality and diversification of mobile telephones.

## Claims

1. A mobile telephone consisting of a system for receiving and transmitting wireless communications, a main body whereon a keyboard is arranged, a panel whereon a screen is set, functional and removable elements, the main body and the panel are connected in such a way as to be capable of being shifted in relation to one another, **characterized in that** the main body is U-shaped, the main body and the panel are connected in such a way that in the "closed" mode of the telephone the front and rear sides and the lower edge of the telephone are formed by parts of the main body, and the upper edge and at least the upper parts of the lateral edges of the telephone are formed by parts of the panel, wherein functional and removable elements arranged on the lower part of the main body are enclosed by the lateral edges of the panel, and functional and removable elements arranged on the lower part of the panel are enclosed by the lateral edges of the main body, wherein in the "open" mode of the telephone access to the functional and removable elements is provided by the controlled shifting of the panel in relation to the main body.

2. A mobile telephone as claimed in Claim 1 wherein the panel is Π-shaped.

3. A mobile telephone as claimed in Claim 1 wherein the panel is rectangular in shape.

4. A mobile telephone as claimed in Claim 1 wherein a propulsion is additionally set.

5. A mobile telephone as claimed in Claim 1 wherein elements of shifting of the panel are additionally arranged and rigidly or kinetically connected with the panel.

6. A mobile telephone as claimed in Claim 1 wherein in the lower part of the main body a niche is made wherein the lower part of the panel is placed.

7. A mobile telephone as claimed in Claim 1 wherein quick connect/disconnect elements for the panel and the main body are additionally arranged.
